# EUROPEAN PATENT SPECIFICATION

(11) **EP 2 682 968 B1**
(45) Date of publication and mention of the grant of the patent: **22.04.2015**
(21) Application number: 13187226.9
(22) Date of filing: 28.06.2010
(51) Int. Cl.: H01G 9/10, H01G 2/04, H01G 4/224, H01G 9/14

(54) **Power capacitor for low voltage provided with capacitor elements, capacitor element, and method for manufacturing said capacitor element**
Leistungskondensator für Niedrigspannung mit Kondensatorelementen, Kondensatorelement und Verfahren zur Herstellung des besagten Kondensatorelements
Condensateur de puissance basse tension pourvu d'éléments de condensateur, élément de condensateur et procédé de fabrication dudit élément de condensateur

(43) Date of publication of application: 08.01.2014
(62) Divisional of application: 10739960.2
(73) Proprietor: International Capacitors S. A., 08130 Santa Perpetua de Mogoda (ES)
(72) Inventor: Rubio Notario, David, 08130 SANTA PERPETUA DE MOGODA (ES)
(74) Representative: Oficina Ponti, SLP

(56) References cited:
- EP-A2- 0 071 806
- WO-A1-2005/041226
- GB-A- 1 489 638

## Description

The present invention refers to a power capacitor for low voltage provided with capacitor elements, especially intended to compensate reactive power.

The invention also refers to a capacitor element and to the method for manufacturing said capacitor element.

### BACKGROUND OF THE INVENTION

Currently, the prismatic power capacitors for low voltage are manufactured grouping a number of capacitor elements and electrically connecting them by electric cables with joining sleeves.

In the practice this kind of assembly is very complicated and annoying because the group of capacitor elements must be assembled with a lot of hanging cables and with tangled shapes, which makes the assembly even more difficult, and therefore the wiring is never aligned nor placed correctly inside a metallic box where the mounted assembly is housed.

Therefore, a very uneven capacitor which can be damaged and leaving possible active points that can lead to leaks, short-circuits, and bad dielectric insulations between the active part and the metallic box.

Furthermore, this kind of assembly involves an important labour, and the corresponding cost of the used materials. On the other hand, as it is a manual process frequent human errors can be produced, with the consequent reprocessing and production costs.

The capacitor elements comprise a coil provided with connecting cables and a hollow central axis, the coil being embedded in resin inside an enclosing cylinder open at its upper part.

The current capacitor elements are manually manufactured, using working zones with independent tables where the different manual operations are carried out.

For manufacturing a capacitor element, firstly, the coil is made which is manually placed in a hopper to carry out electric tests with a semi-automatic system, where the connection of the element for an insulation test among armours and the electric discharge of the capacitor element are made. The obtained data are registered in the system by batches, not by element units.

Then, once the coil is welded, it is manually placed inside the previously marked cylinder, through its open upper end.

The mark in done by an ink-jet printer to identify each cylinder with the value of the element and the batch number. In this case, neither the data are registered nor traceability is done.

Then, the resin tapping process to protect and seal the capacitor element is done, filling with resin the free space between the coil and the inner walls of the cylinder. To this end, a pre-filling is firstly done for fixing the coil and a subsequent complete filling after a pre-polymerisation time, the dosage of the resin being inexact.

The complete filling is done three to four times because the resin is poured on the coil inside the cylinder, and it is extended in a non-uniform way and by falling, causing possible flotations and/or movements of the coil and with a non-homogeneous final layer.

Therefore, bubbles are formed, being necessary to wait them to go down to continue with the filling. It must be pointed out that the air is not completely removed and that the bubbles that contain air and humidity decrease the life of the capacitor element.

Furthermore, the complete resin tapping process manually done is considerably slow because it lasts more than one minute for each capacitor element.

Then, a final verification with manual connection element by element for measuring the capacity and tangent is carried out. This operation is carried out in a machine and the data are registered in a PC computer with restricted functions.

Finally, the finished capacitor elements are manually discharged for their storage or later assembly.

Consequently, the manufacturing line and the working zones are driven in a 90-95% by manual means, with a dummy between 75-85% during the manufacturing process. The manual operations are involved in the movements, rotations and translations of the capacitor elements for obtaining the different processes of electric tests, marking and protection resin tapping, among others. All with a marking control and data register very restricted in functions, with the possibility of human errors and with a traceability of approximately 25% of the manufactured capacitor elements.

GB 148 9638 discloses one capacitor element according to the preamble of claim 1.

### DESCRIPTION OF THE INVENTION

The object of the power capacitor for low voltage of the present invention is to solve the drawback present in the capacitors known in the art, providing a compact capacitor, with simpler and more secure assembly, permitting an automatized manufacturing.

Such an object of the invention is a capacitor element according to claim 1 and a method of manufacturing a capacitor element according to claim 3.

The power capacitor for low voltage is of the kind comprising a plurality of capacitor elements housed inside a protection box provided with connecting terminals, and it is characterized in that it comprises at least one modular unit including a print circuit board on which an assembly of capacitor elements are electrically connected, and said power capacitor being susceptible of combining a series of modular units each provided with the same or different number of capacitor elements to reach any required total power.

Thanks to this modular distribution a more compact capacitor is obtained, with a lower size, with less quantity of used materials, electrically better protected, and environment friendly. Furthermore, it is possible to configure any power thanks to the multiple modular combinations of the capacitor elements.

Other advantages of the power capacitor of the invention are described hereinafter:
- It can be automatized practically in a 100%, so that the labour intervention is almost null, with the consequent removal of human errors.
- It enhances the thermal features, obtaining a class D climatic range, according to the current international standard IEC 60831-1/2.
- Less kinds of boxed are required, permitting the standardization.
- Perfect adaptation and quick assembly of the modular assembly inside the protection box.
- Less manufacturing time and enhancement of delivery times to the client.
- Reduction of the manufacturing cost thanks to the automatization of the assembly process, optimised use of the boxes, and decrease of references of semi-elaborated products.
- It permits an automatic final verification and an automatized register.
- It satisfies the current international standard IEC 60831-1/2.
- It is possible to carry out the maintenance and repair for each capacitor element, for each modular unit, or for the complete assembly.
- It enhances the quality and reliability, obtaining an enhancement of the mean life in accelerated ageing thanks to the novel resin tapping process of the capacitor elements through their axis, as will be explained with detail hereinafter, producing an outwardly degassing and removing the air bubbles, so that its life is increased and aspect, and with an homogeneous surrounding layer.

Advantageously, the capacitor includes an aligned wiring, preferably formed by a group of cables, that emerges from an end to the respective terminals.

Therefore, it is obtained a considerable decrease of about 95% of the wiring with respect to that used in the capacitors known in the state of the art, and consequently it is obtain a decrease in the manufacturing costs in used materials.

Furthermore, the wiring is perfectly in order during the assembly process of the capacitor elements and during the connecting process of the terminals.

Also advantageously, the different modular units are assembled in groups of two, each group being joined to the following one forming a row, and the placement of an individual modular unit being provided when the combination of modular units is odd.

This kind of configuration permits to do different modular combinations in a quick and efficient way, and occupying a minimal space.

Preferably, each group of two modular units is mounted with their respective boards superposed to each other and with the connection faces on which the capacitor elements are connected directed opposed outwardly.

Advantageously, both superposed boards are separated by a space for the passage of the wiring.

Advantageously, the capacitor comprises clipping means for fixing both superposed boards of a group of modular units and for fixing groups of adjacent modular units. Therefore, the assembly process is facilitated.

Preferably, the boards are configured so that the capacitor elements are staggered distributed. This way, the space between said elements is optimised and between groups of boards joined in rows.

Advantageously, the protection box is prismatic, whose height is defined according to the number of groups of modular units assembled in rows. This permits to provide a series of standardized boxes.

According to the invention, a capacitor element according to claim 1 is referred, of the kind that comprises a coil provided with a hollow central axis and connection cables, said coil being embedded in resin inside a surrounding cylinder open at its upper part, and it is characterized in that it comprises an auto-centring disk for the axis and the connection cables engaged to the upper part of the cylinder.

This way, before the resin tapping, the auto-centring disk permit to place the coil in a central position with respect to the inner walls of the cylinder, that guarantees a uniform filling and distribution of the resin inside the cylinder, as explained hereinafter.

Advantageously, the connection cables are electric threads as connecting and/or welding pins to a printed circuit board.

This way, the cables used in the state of the art are avoided, the connection to a printed circuit board being simpler and more efficient, for different applications and utilities.

The invention refers to the method for manufacturing a capacitor element according to claim 3, previously described, characterized in that it includes in an automatized assembly line the following steps:
a) Placing on a conveyor belt each capacitor element with the coil provided with the connection pins, housed inside the surrounding cylinder and with the auto-centring disk placed not closed;
b) Centring and closing the auto-centring disk to place the axis of the coil centred with respect to the cylinder, by an automatized closing and auto-centring station;
c) Weighting the capacitor element by a high precision automatized weighting station, for a correct dosage in a later resin-tapping step;
d) Directing the connection pins for carrying out subsequent electric tests by an automatic positioning station;
e) Connecting the pins to carry out the insulation test among the armatures of the capacitor element, and to electrically discharge the capacitor element in an automatized station of dielectric and discharge test;
f) Identifying each capacitor element, preferably by an ink jet printer, for a traceability of all the manufactured capacitor elements, by an automatized marking station;
g) Carrying out the resin tapping injecting a preset quantity of resin at the upper part through the centring axis of the capacitor element by an automatized resin tapping station, filling in an homogeneous way from the bottom to the top the space between the coil and the inner walls of the cylinder; and
h) Carrying out a final electric verification automatically connecting the pins for measuring the capacity and the tangent, by an automatized final verification station.

It must be pointed out that thanks to the resin-tapping step through the axis of the coil, a degassing inside the cylinder is caused, from the bottom to the top evacuating the air outside and homogeneously filling the displaced volume, not producing any bubble containing air and humidity, increasing therefore the life of the capacitor element.

Furthermore, a reduction of time of the resin tapping process for each capacitor element is obtained.

Advantageously, after the final verification of step h) an intermediate reprocessing zone is provided for selecting and recovering capacitor elements detected with any defect during the manufacturing process.

Also advantageously, after the reprocessing zone an automatized discharge zone of the finished capacitor elements is provided, and an automatized rejection zone for separating all the capacitor elements that have not passed established tests according to a model and production process established.

Optionally, the finished capacitor elements are conveyed by an automatic translation system to an assembly zone of modular units and automatized welding.

Advantageously, control means are used to interact by suitable software on the assembly line, the working stations and intermediate zones until the finished capacitor element is obtained.

The control means permits to interact in all the orders of movements, rotations and translations to carry out the different weighting processes, electric tests, marking and protection resin tapping, all with a data marking and registering control which guarantees a traceability of 100% of the manufactured product and without any intervention of human factor during all these processes.

### BRIEF DESCRIPTION OF THE DRAWINGS

To facilitate the description of what has been described previously some drawings are attached, in which, diagrammatically and only as a non-limitative example, examples of the power capacitor for low voltage are shown, and one embodiment of the capacitor element of the invention, in which:
Fig. 1 is a perspective view of the power capacitor in a mounted position;
Fig. 2 is a perspective view of the capacitor with the protection box open showing the wiring;
Fig. 3 is a perspective view of a compact group with two modular units of nine capacitor elements each;
Fig. 4 is a side view of the modular group of Fig. 3, showing the space between the boards provided for the wiring passage;
Fig. 5 is a profile view of the modular group of Fig. 3, showing the distribution of the capacitor elements on the board;
Fig. 6 is a profile view of a compact group of two modular units of six capacitor elements each;
Fig. 7 is a longitudinal section of a capacitor element of the invention before the resin tapping is applied; and
Fig. 8 is a longitudinal section of the capacitor element of Fig. 7 after the resin tapping is applied.

### DESCRIPTION OF PREFERRED EMBODIMENTS

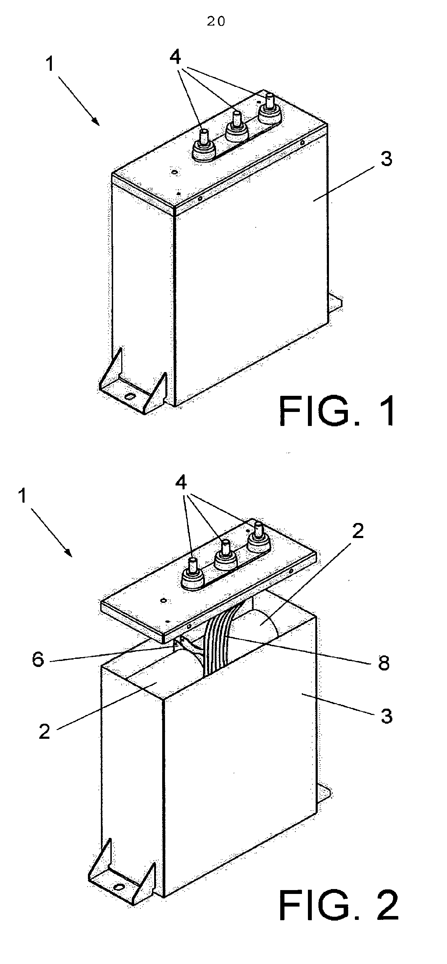

According to a first example, useful to understand the invention shown in Figs. 1 to 5, the power capacitor 1 for low voltage of the present invention is of the kind that comprises a plurality of capacitor elements 2 housed inside a protection box 3 provided with connecting terminals 4.

The capacitor 1 comprises at least one modular unit 5 including a printed circuit board 6 on which an assembly of capacitor elements 2 are electrically connected.

Furthermore, said capacitor 1 is susceptible of combining a series of modular units 5 provided each with the same or a different number of capacitor elements 2 to reach any required power, as explained hereinafter.

Therefore, a compact capacitor is obtained, with a simpler and more secure assembly, cheaper and that permits an automatized manufacturing.

In this first embodiment a power capacitor 1 comprising a group of two modular units 5 of nine capacitor elements 2 each is shown.

Both modular units 5 are mounted with their respective boards 6 superposed to each other and with the connection faces on which the capacitor elements 2 are connected directed opposed outwardly.

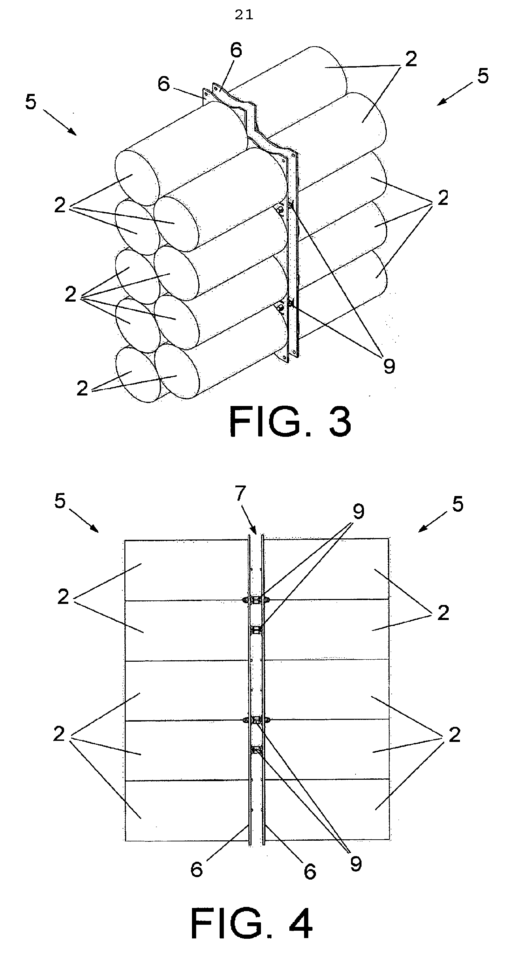

Both superposed boards 6 are separated by a space 7 for passing the wiring 8 of the capacitor elements 2 (see Figs. 2 and 4).

The wiring 8 is formed by three cables aligned and directed to the respective terminals 4. This way, a considerable decrease of about 95% of the wiring with respect to the known capacitors is obtained.

Furthermore, the capacitor 1 comprises clipping means 9 for fixing both superposed boards 6.

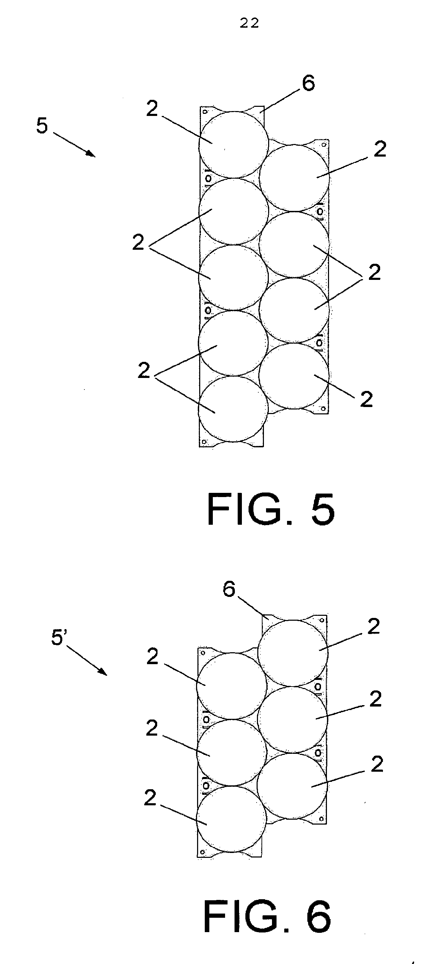

The boards 6 are configured so that the capacitor elements 2 are staggered distributed (see Fig. 5), i.e. in two parallel rows, so that the elements placed in each row are faced in the middle of the hollows of the immediate row, forming equilateral triangles. This way, the space between said elements 2 and between groups of boards 6 joined in rows is optimised.

Another example shown in Fig. 6, a power capacitor with the same constructive features than in the first embodiment is shown, but with the difference that it comprises a group formed by two modular units 5' of six capacitor elements 2 each.

Besides these two described embodiments, it is possible to obtain a greater range of powers adding groups of two modular units 5 joined to each other forming a row, the placement of one individual modular unit 5 when the combination of modular units 5 is odd is provided (not shown).

The fixation between groups of modular units 5 adjacent in rows is carried out using clipping means. This kind of configuration permits to carry out different modular combinations in a quick and efficient way, and occupying a minimal space.

Table 1 shows the multiple modular combinations that can be done to obtain any range of powers, combining in this case modular units 5 with six or nine capacitor elements 2 respectively.

**Table 1**

| Number of modular units | Combination | Total capacitor elements |
|---|---|---|
| 1 | 6 | 6 |
| 1 | 9 | 9 |
| 2 | 6+6 | 12 |
| 2 | 9+6 | 15 |
| 2 | 9+9 | 18 |
| 3 | 6+6+6 | 18 |
| 3 | 9+6+6 | 21 |
| 3 | 9+9+6 | 24 |
| 3 | 9+9+9 | 27 |
| 4 | 6+6+6+6 | 24 |
| 4 | 9+6+6+6 | 27 |
| 4 | 9+9+6+6 | 30 |
| 4 | 9+9+9+6 | 33 |
| 4 | 9+9+9+9 | 36 |
| 5 | 6+6+6+6+6 | 30 |
| 5 | 9+6+6+6+6 | 33 |
| 6 | 6+6+6+6+6+6 | 36 |

To obtain a greater precision of powers the number of capacitor elements 2 mounted in one modular unit 5 can be decreased, e.g. connecting only three capacitor elements 2 in a board 6 provided for a maximum of six elements 2.

The protection box 3 is prismatic, whose height is defined according to the number of groups of modular units 5 joined in rows. This permits to provide a series of standardized boxes.

It must be pointed out that even though modular units 5 for six or nine capacitor elements 2 are described, it is also possible to use modular units 5 with another number of elements 2, depending on the needs and applications.

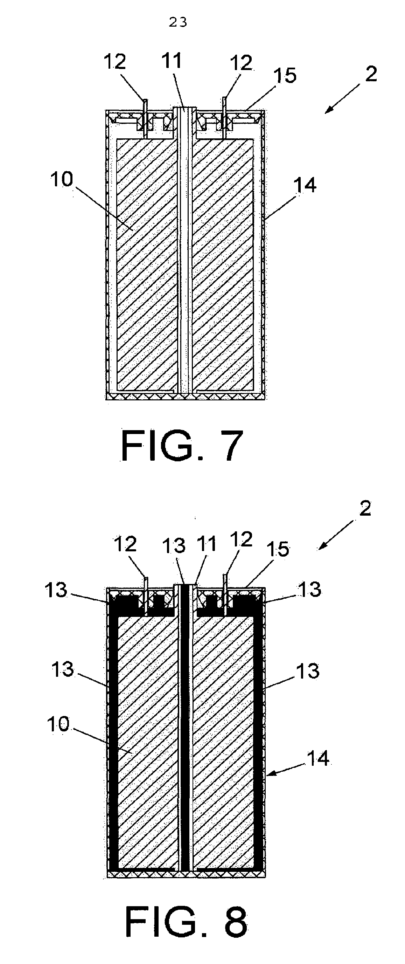

According to the invention, in Figs. 7 and 8 is shown a capacitor element 2 comprising a coil 10 provided with a hollow central axis 11 and electric wires 12 as connection and/or welding pins to a printed circuit board 6 (see Figs. 3 to 6).

The use of electric wires as pins 12, instead of cables as in the estate of the art, makes the connection to a printed circuit board 6 easier.

Furthermore, said coil 10 is embedded in resin 13 inside a surrounding cylinder 14 open at its upper part. Figs. 7 and 8 show the capacitor element 2 before and after the resin 13 is placed, respectively.

Furthermore, the capacitor element 2 includes an auto-centring disk 15 for the axis 11 and the connection pins 12 engaged at the upper part of the cylinder 14.

Thanks to the auto-centring disk 15, the coil 10 is placed in a centred position with respect to the inner walls of the cylinder 14 before the resin is applied tapping, which permits to homogeneously fill and distribute the resin 13 inside the cylinder, as will be described hereinafter with more detail.

The invention refers further to the method for manufacturing a capacitor element 2, previously described, including the following steps in an automatized assembly line:
a) Placing on a conveyor belt each capacitor element 2 with the coil 10 provided with the connection pins 12, housed inside the surrounding cylinder 14 and with the auto-centring disk 15 placed not closed;
b) Centring and closing the auto-centring disk 15 to place the axis 11 of the coil 10 centred with respect to the cylinder 14, by an automatized closing and auto-centring station;
c) Weighting the capacitor element 2 by a high precision automatized weighting station, for a correct dosage in a later resin-tapping step;
d) Directing the connection pins 12 for carrying out subsequent electric tests by an automatic positioning station;
e) Connecting the pins 12 to carry out the insulation test among the armatures of the capacitor element 2, and to electrically discharge the capacitor element 2 in an automatized station of dielectric and discharge test;
f) Identifying each capacitor element 2, preferably by an ink jet printer, for a traceability of all the manufactured capacitor elements 2, by an automatized marking station;
g) Carrying out the resin tapping injecting a preset quantity of resin 13 at the upper part through the centring axis 11 of the capacitor element 2 by an automatized resin tapping station, filling in an homogeneous way from the bottom to the top the space between the coil 10 and the inner walls of the cylinder 14; and
h) Carrying out a final electric verification automatically connecting the pins 12 for measuring the capacity and the tangent, by an automatized final verification station.

It must be pointed out that thanks to the resin tapping step through the axis 11 of the coil 10, a degassing inside the cylinder 14 from the bottom to the top is caused, removing the air outwardly and homogeneously filling the moved volume, with no formation of bubbles of air and humidity, increasing therefore the life of the capacitor element 2.

Furthermore, a reduction of the resin tapping processing time for each capacitor element 2 is obtained, because it lapses about five seconds, in front to more than one minute used in the manual resin tapping operation known in the state of the art.

After the final verification of step h) an intermediate reprocessing zone is provided for selecting and recovering capacitor elements 2 that during the manufacturing process and for different reasons any kind of problem could be detected during their passage by the different working stations or intermediate zones.

After the reprocessing zone an automatized discharging zone of the finished capacitor elements 2 is provided and an automatized rejection zone for separating any capacitor element 2 that has not passed some tests established according a preset model and manufacturing method.

The finished capacitor elements 2 can be marketed individually for different uses or application according to the needs of the client; or they can be conveyed by an automatic translation system to an assembly zone of modular units 5 and automatized welding.

Said modular units 5 can also be marketed for different uses, or they can be assembled for manufacturing the power capacitor 1 of the invention previously described.

Furthermore, control means are used to interact by suitable software on the assembly line, the working stations and intermediate zones until the finished capacitor element is obtained.

The control means permit to interact in all the orders of movements, rotations and translations for obtaining the different weighting, electric tests, marking and protection resin tapping processes, all with a marking control and data registry that guarantees a traceability of 100% of the manufactured product and with no human intervention during all these processes.

## Claims

1. Capacitor element (2), comprising a coil (10) provided with a hollow central axis (11) and connection cables (12), said coil (10) being embedded in resin (13) inside a surrounding cylinder (14) open at its upper part, **characterized in that** it comprises an auto-centring disk (15) for the axis (11) and the connecting cables (12) engaged to the upper part of the cylinder (14), said auto-centring disk (15) further engages said hollow central axis (11) and said connecting cables (12) wherein centring and closing said auto-centring disk (15) enables placing the coil (10) and the hollow centring axis (11) in a central position with respect to the inner walls of the cylinder (14).

2. Capacitor element (2) according to claim 1, wherein the connection cables are electric threads (12) as connecting and/or welding pins to a printed circuit board (6).

3. Method for manufacturing a capacitor element according to claim 1 or 2, **characterized in that** it includes the following steps in an automatized assembly line:
a) Placing on a conveyor belt each capacitor element (2) with the coil (10) provided with the connection pins (12), housed inside the surrounding cylinder (14) and with the auto-centring disk (15) placed not closed;
b) Centring and closing the auto-centring disk (15) to place the axis (11) of the coil (10) centred with respect to the cylinder (14), by an automatized closing and auto-centring station;
c) Weighting the capacitor element (2) by a high precision automatized weighting station, for a correct dosage in a later resin-tapping step;
d) Directing the connection pins (12) for carrying out subsequent electric tests by an automatic positioning station;
e) Connecting the pins (12) to carry out the insulation test among the armatures of the capacitor element (2), and to electrically discharge the capacitor element (2) in an automatized station of dielectric and discharge test;
f) Identifying each capacitor element (2), preferably by an ink jet printer, for a traceability of all the manufactured capacitor elements (2), by an automatized marking station;
g) Carrying out the resin tapping injecting a preset quantity of resin (13) at the upper part through the centring axis (11) of the capacitor element (2) by an automatized resin tapping station, filling in an homogeneous way from the bottom to the top the space between the coil (10) and the inner walls of the cylinder (14); and
h) Carrying out a final electric verification automatically connecting the pins (12) for measuring the capacity and the tangent, by an automatized final verification station.

4. Method according to claim 3, wherein after the final verification of step h) an intermediate reprocessing zone is provided for selecting and recovering capacitor elements (2) detected with any defect during the manufacturing method.

5. Method according to claim 4, wherein after the reprocessing zone an automatized discharge zone of the finished capacitor elements (2) is provided, and an automatized rejection zone for separating all the capacitor elements (2) that have not passed established tests according to a model and production process established.

6. Method according to claim 5, wherein the finished capacitor elements (2) are conveyed by an automatic translation system to an assembly zone of modular units (5) and automatized welding.

7. Method according to anyone of claims 3 to 6, wherein control means are used to interact by suitable software on the assembly line, the working stations and intermediate zones until the finished capacitor element (2) is obtained.

## Patentansprüche

1. Kondensatorelement (2), das eine Spule (10) aufweist, die mit einer hohlen Mittelachse (11) und Verbindungskabeln (12) versehen ist, wobei die Spule (10) in Harz (13) in einem umgebenden Zylinder (14), der an seinem oberen Teil offen ist, eingebettet ist, **dadurch gekennzeichnet, dass** es eine Selbstzentrierungsscheibe (15) für die Achse (11) und die an dem oberen Teil des Zylinders (14) in Eingriff genommenen Verbindungskabel (12) aufweist, wobei die Selbstzentrierungsscheibe (15) ferner die hohle Mittelachse (11) und die Verbindungskabel (12) in Eingriff nimmt, wobei ein Zentrieren und Schließen der Selbstzentrierungsscheibe (15) ein Platzieren der Spule (10) und der hohlen Zentrierungsachse (11) in einer zentralen Position bezüglich der Innenwände des Zylinders (14) ermöglicht.

2. Kondensatorelement (2) gemäß Anspruch 1, bei dem die Verbindungskabel Elektrogewinde (12) als Verbindungs- und/oder Schweißbolzen an einer gedruckten Schaltungsplatine (6) sind.

3. Verfahren zum Herstellen eines Kondensatorelements gemäß Anspruch 1 oder 2, **dadurch gekennzeichnet, dass** es bei einem automatisierten Fließband die folgenden Schritte umfasst:
a) Platzieren jedes Kondensatorelements (2) auf einem Förderband, wobei die Spule (10) mit den Verbindungsbolzen (12) versehen und in dem umgebenden Zylinder (14) untergebracht ist und wobei die platzierte Selbstzentrierungsscheibe (15) nicht geschlossen ist;
b) Zentrieren und Schließen der Selbstzentrierungsscheibe (15), um die Achse (11) der Spule (10) bezüglich des Zylinders (14) zentriert zu platzieren, anhand einer automatisierten Schließ- und Selbstzentrierungsstation;
c) Gewichten des Kondensatorelements (2) anhand einer automatisierten Hochpräzisions-Gewichtungsstation zum Zweck einer richtigen Dosierung bei einem späteren Harzzapfschritt;
d) Lenken der Verbindungsbolzen (12) zum Durchführen anschließender elektrischer Tests seitens einer automatischen Positionierungsstation;
e) Verbinden der Bolzen (12), um den Isolierungstest zwischen den Ankern des Kondensatorelements (2) durchzuführen und um das Kondensatorelement (2) in einer automatisierten Station eines dielektrischen und Entladungstests elektrisch zu entladen;
f) Identifizieren jedes Kondensatorelements (2), vorzugsweise seitens eines Tintenstrahldruckers, bezüglich einer Verfolgbarkeit aller hergestellten Kondensatorelemente (2) seitens einer automatisierten Markierungsstation;
g) Durchführen des Harzzapfens anhand eines Injizierens einer voreingestellten Menge an Harz (13) an dem oberen Teil durch die Zentrierungsachse (11) des Kondensatorelements (2) hindurch seitens einer automatisierter Harzzapfstation, homogenes Auffüllen des Raums zwischen der Spule (10) und den Innenwänden des Zylinders (14) von unten nach oben; und
h) Durchführen einer abschließenden elektrischen Überprüfung, die die Bolzen (12) automatisch verbindet, um die Kapazität und die Tangente zu messen, seitens einer automatisierten Abschlussüberprüfungsstation.

4. Verfahren gemäß Anspruch 3, bei dem nach der Abschlussüberprüfung des Schritts (h) eine dazwischen liegende Nachverarbeitungszone zum Auswählen und Bergen von Kondensatorelementen (2), bei denen während des Herstellungsverfahrens ein Defekt erfasst wurde, vorgesehen ist.

5. Verfahren gemäß Anspruch 4, bei dem nach der Nachverarbeitungszone eine automatisierte Entladezone der fertiggestellten Kondensatorelemente (2) vorgesehen ist und eine automatisierte Rückweisungszone zum Aussondern aller Kondensatorelemente (2), die etablierte Tests gemäß einem etablierten Modell- und Herstellungsprozess nicht bestanden haben.

6. Verfahren gemäß Anspruch 5, bei dem die fertiggestellten Kondensatorelemente (2) durch ein automatisches Verschiebungssystem zu einer Montagezone modularer Einheiten (5) und eines automatisierten Schweißens befördert werden.

7. Verfahren gemäß einem der Ansprüche 3 bis 6, bei dem eine Steuereinrichtung verwendet wird, um anhand einer geeigneten Software auf dem Fließband die Arbeitsstationen und dazwischen liegenden Zonen interagieren zu lassen, bis das fertiggestellte Kondensatorelement (2) erhalten wird.

## Revendications

1. Élément de condensateur (2), comprenant une bobine (10) dotée d'un axe central creux (11) et de câbles de connexion (12), ladite bobine (10) étant noyée dans la résine (13) à l'intérieur d'un cylindre enveloppant (14) ouvert à sa partie supérieure, **caractérisé en ce qu'**il comprend un disque auto-centrant (15) pour l'axe (11) et les câbles de connexion (12) engagé à la partie supérieure du cylindre (14), ledit disque auto-centrant (15) engage en outre ledit axe central creux (11) et lesdits câbles de connexion (12), dans lequel le centrage et la fermeture dudit disque auto-centrant (15) permet de placer la bobine (10) et l'axe central creux (11) dans une position centrale par rapport aux parois intérieures du cylindre (14).

2. Élément de condensateur (2) selon la revendication 1, dans lequel les câbles de connexion sont des fils électriques (12) en forme de broches de connexion et/ou de soudage à une plaquette de circuits imprimés (6).

3. Procédé de fabrication d'un élément de condensateur selon la revendication 1 ou 2, **caractérisé en ce qu'**il inclut les étapes suivantes dans une ligne d'assemblage automatisée:
a) placer sur une courroie transporteuse chaque élément de condensateur (2) avec la bobine (10) munie des broches de connexion (12), logée à l'intérieur du cylindre enveloppant (14) et avec le disque auto-centrant (15) placé, mais non fermé ;
b) centrer et fermer le disque auto-centrant (15) pour placer l'axe (11) de la bobine (10) en position centrée par rapport au cylindre (14), au moyen d'une station automatisée de fermeture et d'auto-centrage ;
c) peser l'élément de condensateur (2) au moyen d'une station de pesage automatisée de haute précision en vue d'un dosage correct lors d'une étape ultérieure de coulée de résine ;
d) diriger les broches de connexion (12) en vue d'effectuer des tests électriques ultérieurs au moyen d'une station de positionnement automatisée ;
e) connecter les broches (12) en vue d'effectuer le test d'isolement entre les armatures de l'élément de condensateur (2) et de décharger électriquement l'élément de condensateur (2) dans une station automatisée de test du diélectrique et de décharge ;
f) identifier chaque élément de condensateur (2), de préférence au moyen d'une imprimante à jet d'encre, pour assurer la traçabilité de tous les éléments de condensateur fabriqués (2) au moyen d'une station de marquage automatisée ;
g) procéder à la coulée de résine en injectant une quantité prédéterminée de résine (13) à la partie supérieure à travers l'axe central (11) de l'élément de condensateur (2) au moyen d'une station automatisée de coulée de résine, remplir de façon homogène de bas en haut l'espace entre la bobine (10) et les parois intérieures du cylindre (14) ; et
h) procéder à une vérification électrique finale en connectant automatiquement les broches (12) afin de mesurer la capacité et la tangente au moyen d'une station automatisée de vérification finale.

4. Procédé selon la revendication 3, dans lequel il est prévu, après la vérification finale de l'étape h), une zone de retraitement intermédiaire pour sélectionner et récupérer les éléments de condensateur (2) détectés avec un défaut quelconque pendant le processus de fabrication.

5. Procédé selon la revendication 4, dans lequel il est prévu, après la zone de retraitement, une zone automatisée de décharge des éléments de condensateur terminés (2) ainsi qu'une zone d'éjection automatisée pour séparer tous les éléments de condensateur (2) qui n'ont pas réussi les tests établis selon un modèle et un processus de production établis.

6. Procédé selon la revendication 5, dans lequel les éléments de condensateur terminés (2) sont transportés par un système de transfert automatique jusqu'à une zone d'assemblage d'unités modulaires (5) et de soudage automatisé.

7. Procédé selon l'une quelconque des revendications 3 à 6, dans lequel on utilise des moyens de commande pour agir, par l'intermédiaire d'un logiciel approprié, sur la ligne d'assemblage, les stations de travail et les zones intermédiaires jusqu'à ce que l'élément de condensateur terminé (2) soit obtenu.
